# EUROPÄISCHE PATENTSCHRIFT

(11) **EP 1 126 201 B1**
(45) Veröffentlichungstag und Bekanntmachung des Hinweises auf die Patenterteilung: **26.04.2006**
(21) Anmeldenummer: 00128486.8
(22) Anmeldetag: 23.12.2000
(51) Int. Cl.: F16J 15/34

(54) **Laufwerkdichtung**
Drive sealing
Joint d'étanchéité pour dispositif d'entrainement

(30) Priorität: 16.02.2000 DE 10006997
(43) Veröffentlichungstag der Anmeldung: 22.08.2001
(73) Patentinhaber: Federal-Mogul Friedberg GmbH, 86316 Friedberg (DE)
(72) Erfinder: Göbbels, Franz-Josef, 51399 Burscheid (DE); Zutz, Hans-Henning, 42929 Wermelskirchen (DE)

(56) Entgegenhaltungen:
- EP-A- 0 131 286
- EP-A- 0 290 752
- EP-A- 0 487 882
- EP-A- 0 723 099
- DE-A- 2 600 505
- DE-A- 3 404 964
- DE-B- 1 045 192
- US-A- 4 146 238

## Beschreibung

Die Erfindung betrifft eine Laufwerkdichtung, insbesondere für Baumaschinen, bestehend aus einem mit einem elastischen Element zusammenwirkenden Gleit- und/oder Gegenring. Eine derartige Dichtung ist aus der EP-A- 131 286 bekannt

Der EP-A 0 121 286 ist eine Gleitringdichtung zur Abdichtung gegen schlammartige Medien zu entnehmen. Die Gleitringdichtung beinhaltet einen Gleitring, einen Gegenring, Federringe und eine Federhalterung, wobei im Bereich der Außenumfangsfläche ein schraubenförmiges Profil vorgesehen ist, welches dem Pumpen von Flüssigkeit dient. Nachteilig an dieser Konstruktion ist festzustellen, dass die Ringkontur komplex im Aufbau ist, wobei das schraubenförmige Profil bei der Fertigung des Gleitringes mechanisch eingebracht werden muß.

Durch die DE-C 10 45 192 ist eine Gleitringdichtung bekanntgeworden, bei welcher im Gleitring, von der Gleitfläche axial in Richtung der gegenüberliegenden Stirnfläche verlaufende, durchgehende Bohrungen vorgesehen werden. Derartige Gleitringdichtungen sind insbesondere bei Baumaschinen nicht einsetzbar, da hier besondere räumliche Gegebenheiten vorhanden sind.

Durch Leistungssteigerungen bei Baumaschinen muß mit höheren, Aggregattemperaturen gerechnet werden. Hinzu kommt die Temperatur, welche aus den Reibleistungen des Gleit- und/oder Gegenringes selber resultiert. Die üblicherweise bei Laufwerkdichtungsringen zur Verfügung stehenden Gleitflächen reichen dabei in aller Regel nicht aus, um die entstehende Reibungswärme an das Schmiermittel abzugeben.

Der Erfindung liegt die Aufgabe zugrunde, eine Laufwerkdichtung, insbesondere für Baumaschinen, dahingehend weiterzubilden, dass die im Betriebszustand entstehende Reibungswärme an das Schmiermittel abgegeben werden kann, ohne dass es zu erheblichen Mehrkosten bei der Formgebung des Gleit- und/oder Gegenringes kommt. Mechanische Nachbearbeitungen des Gleit- und/oder Gegenringes sollen entbehrlich sein.

Diese Aufgabe wird dadurch gelöst, dass im Bereich der dem Schmiermittel zugewandten, keine Dichtfunktion ausübenden Fläche des Gleit- und/oder Gegenringes das Schmiermittel aus dem Bereich des Dichtspaltes abführende Schmiermittelförderelemente vorgesehen sind.

Vorteilhafte Weiterbildungen des Erfindungsgegenstandes sind den Unteransprüchen zu entnehmen.

Die am Umfang, im wesentlichen gleichmäßig verteilten, je nach Anwendungsfall geometrisch unterschiedlich gestalteten, Schmiermittelförderelemente werden unmittelbar bei der Erzeugung, insbesondere durch Gießen, am Gleit- und/oder Gegenring angeformt. Je nach Anwendungsfall können die Schmiermittelförderelemente am Gleitring, am Gegenring oder aber an beiden Ringen vorgesehen werden, um eine optimale Abführung der Reibungswärme herbeizuführen.

Die Schmiermittelförderelemente können durch Erhöhungen oder Vertiefungen unterschiedlichster geometrischer Form gebildet sein. Neben der Funktion des Schmierölrückförderns werden gleichzeitig vergrößerte Flächenbereiche geschaffen, die eine verbesserte Wärmeabgabe an das schmierende/kühlende Öl ermöglichen.

Die Erhöhungen oder Vertiefungen können je nach Fördermengenbedarf in axialer Richtung gerade oder auch geneigt angeordnet werden. Die geometrische Form kann stegförmig, dreieckförmig oder rippenartig ausgebildet sein.

Dadurch, dass durch die, wie eine Pumpe wirkenden, Schmiermittelförderelemente das erwärmte Öl vom Dichtspalt weggefördert wird, kann Frischöl einen besseren Zugang zum Gleit- und/oder Gegenring erhalten. Durch diese Maßnahme kann Leistungssteigerungen, insbesondere bei Baumaschinen, im Hinblick auf die durch erhöhte Reibleistung entstehende Temperatur im Bereich des Gleit- und/oder Gegenringes optimal Rechnung getragen werden.

Der Erfindungsgegenstand ist anhand eines Ausführungsbeispiels in der Zeichnung dargestellt und wird wie folgt beschrieben. Es zeigen:
- Figur 1: Darstellung von Laufwerkdichtungen mit unterschiedlich angeordneten Schmiermittelförderelementen in Form von Erhebungen;
- Figur 2: Einzeldarstellung eines Gleitringes mit einem im Querschnitt dreieckförmigen Schmiermittelförderelement in Form einer Erhöhung;
- Figur 3: Laufwerkdichtung mit einseitig angeordneten Schmiermittelförderelementen in Form von Erhöhungen;
- Figur 4: Gegenring mit Vertiefungen als Schmiermittelförderelemente.

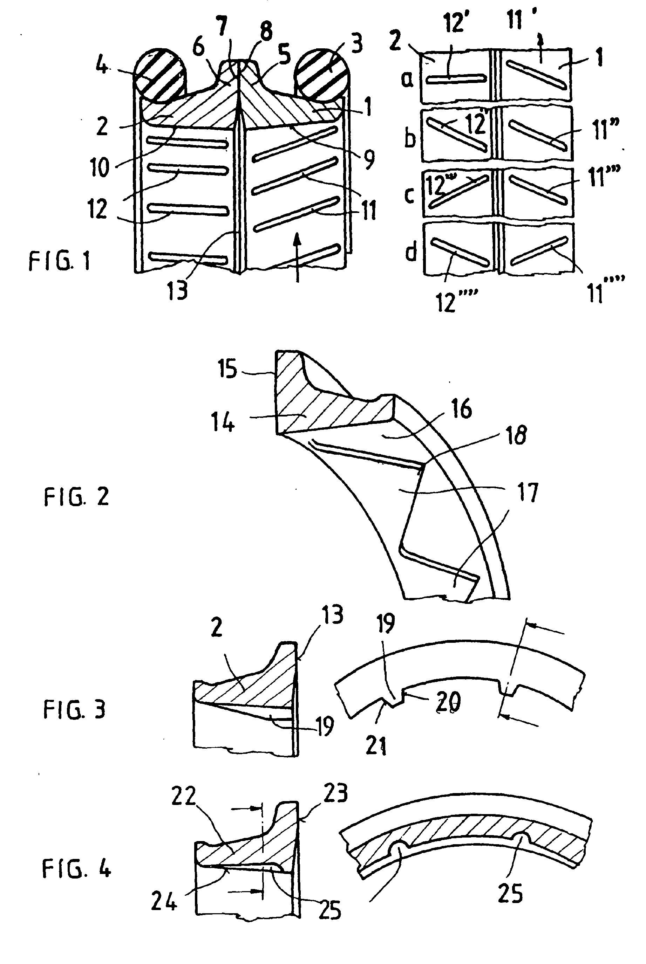

Figur 1 zeigt verschiedene Laufwerkdichtungen, bestehend aus einem rotierendem Gleitring 1, einem stehenden Gegenring 2 sowie mit diesen zusammenwirkenden elastischen Elementen 3,4. Der Gleitring 1 und der Gegenring 2 sind im Querschnitt winkelförmig ausgebildet, wobei im Bereich der Radialschenkel 5,6 Gleitflächen 7,8 vorgesehen sind. Im Bereich der inneren Umfangsflächen 9,10 sind rippenartig ausgebildete Schmiermittelförderelemente 11,12 vorgesehen, die so angeordnet sind, dass das Schmiermittel von dem jeweiligen Dichtspalt 13 weggefördert wird.

Figur 2 zeigt eine Teilansicht eines Gleitringes 14. Ausschließlich im Bereich der, der Gleitfläche 15 abgewandten funktionsfreien Fläche 16 sind im Querschnitt dreieckförmige Schmiermittelförderelemente 17 vorgesehen, wobei die Spitze 18 derselben von der Gleitfläche 15 wegweist.

Figur 3 zeigt eine Laufwerkdichtung analog zu Figur 1. Im Bereich des Gegenringes 2 sind rippenartige Erhebungen 19 vorgesehen, die axial gerichtet und an den Seitenflanken 20, 21 kegelig ausgeführt sind. Neben einer Flächenvergrößerung der Rippen 19 wird auch das erwärmte Öl vom Dichtspalt 13 weggefördert, wodurch Frischöl besseren Zugang erhält.

Figur 4 zeigt eine weitere Ausführungsform einer Laufwerkdichtung, bestehend aus einem Gegenring 22, der eine Gleitfläche 23 beinhaltet. Die dem Schmiermittel zugewandte funktionsfreie Fläche 24 beinhaltet Schmiermittelförderelemente 25 in Form von Vertiefungen, die nach Art einer Pumpe als Schmierölmitnehmer fungieren, wodurch ein schnellerer Ölaustausch zwischen dem erwärmten und dem kühleren Öl (Sumpföl) gewährleistet wird.

## Patentansprüche

1. Laufwerkdichtung, insbesondere für Baumaschinen, bestehend aus einem mit einem elastischen Element (3,4) zusammenwirkenden Gleit- (1,14) und/oder Gegenring (2,22), **dadurch gekennzeichnet, dass** im Bereich der dem Schmiermittel zugewandten, keine Dichtfunktion ausübenden Fläche (9,10,16,24) des Gleit- (1,14) und/oder Gegenringes (2,22) das Schmiermittel aus dem Bereich des Dichtspaltes (13) abführende Schmiermittelförderelemente (11,12,17,19,25) vorgesehen sind.

2. Laufwerkdichtung nach Anspruch 1, **dadurch gekennzeichnet, dass** die Schmiermittelförderelemente (11,12,17,19) durch Erhöhungen gebildet sind.

3. Laufwerkdichtung nach Anspruch 1, **dadurch gekennzeichnet, dass** die Schmierttelförderelemente (25) durch Vertiefungen gebildet sind.

4. Laufwerkdichtung nach einem der Ansprüche 1 bis 3, **dadurch gekennzeichnet, dass** die Schmiermittelförderelemente (11,12,17,19) durch Förderstege vorgebbarer Höhe und geometrischer Form gebildet sind.

5. Laufwerkdichtungen nach einem der Ansprüche 1 bis 4, **dadurch gekennzeichnet, dass** die Schmiermittelförderelemente (19,25) etwa axial gerichtet sind.

6. Laufwerkdichtung nach einem der Ansprüche 1 bis 5, **dadurch gekennzeichnet, dass** die Schmiermittelförderelemente (19) im Bereich ihrer Seitenflanken (20,21) etwa kegelförmig ausgebildet sind.

7. Laufwerkdichtung nach einem der Ansprüche 1 bis 6, **dadurch gekennzeichnet, dass** die Schmiermittelförderelemente (17) im Querschnitt etwa dreieckig ausgebildet sind, wobei ihre Spitze (18) von der Gleitfläche (15) wegweisend vorgesehen ist.

8. Laufwerkdichtung nach einem der Ansprüche 1 bis 7, **dadurch gekennzeichnet, dass** die Vertiefungen (25) von der der Gleitfläche (23) abgewandten Stirnfläche ausgehend sich in Richtung der Gleitfläche (23) erstrecken.

9. Laufwerkdichtung nach einem der Ansprüche 1 bis 8, **dadurch gekennzeichnet, dass** die Schmiermittelförderelemente (11,12,17,19,25) im Bereich der radial innenliegenden Umfangsfläche (19,16,24) des Gleit- (1,14) und/oder Gegenringes (2,22) angeordnet sind.

## Claims

1. Drive seal, in particular for building machinery, comprising a slide ring (1, 14) and/or counter-ring (2, 22) which cooperates with an elastic element (3, 4), **characterised in that**, in the region of the face (9, 10, 16, 24) of the slide ring (1, 14) and/or counter-ring (2, 22) which is orientated towards the lubricant and has no sealing function, lubricant conveying elements (11, 12, 17, 19, 25) are provided which discharge the lubricant out of the region of the sealing gap (13).

2. Drive seal according to claim 1, **characterised in that** the lubricant conveying elements (11, 12, 17, 19) are formed by raised portions.

3. Drive seal according to claim 1, **characterised in that** the lubricant conveying elements (25) are formed by depressions.

4. Drive seal according to one of the claims 1 to 3, **characterised in that** the lubricant conveying elements (11, 12, 17, 19) are formed by conveying webs of a prescribable height and geometric shape.

5. Drive seals according to one of the claims 1 to 4, **characterised in that** the lubricant conveying elements (19, 25) are directed approximately axially.

6. Drive seal according to one of the claims 1 to 5, **characterised in that** the lubricant conveying elements (19) in the region of their lateral flanks (20, 21) have an approximately conical configuration.

7. Drive seal according to one of the claims 1 to 6, **characterised in that** the lubricant conveying elements (17) have an approximately triangular configuration in cross-section, their tip (18) being provided pointing away from the sliding face (15).

8. Drive seal according to one of the claims 1 to 7, **characterised in that** the depressions (25) extend from the end face orientated away from the sliding face (23) in the direction of the sliding face (23).

9. Drive seal according to one of the claims 1 to 8, **characterised in that** the lubricant conveying elements (11, 12, 17, 19, 25) are disposed in the region of the radially internal circumferential face (19, 16, 24) of the slide ring (1, 14) and/or counter-ring (2, 22).

## Revendications

1. Garniture d'étanchéité de mécanisme de roulement, en particulier pour des machines de construction, constituée à partir d'un anneau de glissement (1, 14) et/ou un contre-anneau (2, 22) coopérant avec un élément élastique (3, 4), **caractérisée en ce que** dans la zone de la surface (9, 10, 16, 24) de l'anneau de glissement (1, 14) et/ou d'un contre-anneau (2, 22) qui ne remplit aucune fonction d'étanchéité et qui est tournée vers le lubrifiant, sont prévus des éléments d'alimentation de lubrifiant (11, 12, 17, 19, 25) qui font sortir le lubrifiant hors de la zone de la fente d'étanchéité (13).

2. Garniture d'étanchéité de mécanisme de roulement selon la revendication 1, **caractérisée en ce que** les éléments d'alimentation de lubrifiant (11, 12, 17, 19) sont formés par des projections.

3. Garniture d'étanchéité de mécanisme de roulement selon la revendication 1, **caractérisé en ce que** les éléments d'alimentation de lubrifiant (25) sont formés par des évidements.

4. Garniture d'étanchéité de mécanisme de roulement selon l'une des revendications 1 à 3, **caractérisé en ce que** les éléments d'alimentation de lubrifiant (11, 12, 17, 19) sont formés par des nervures d'alimentation de hauteur et de forme géométrique prédéterminables.

5. - Garniture d'étanchéité de mécanisme de roulement selon l'une des revendications 1 à 4, **caractérisé en ce que** les éléments d'alimentation de lubrifiant (19, 25) sont dirigés sensiblement axialement.

6. Garniture d'étanchéité de mécanisme de roulement selon l'une des revendications 1 à 5, **caractérisé en ce que** les éléments d'alimentation de lubrifiant (19) sont réalisés de manière sensiblement conique dans la zone de leur flancs latéraux (20, 21).

7. Garniture d'étanchéité de mécanisme de roulement selon l'une des revendications 1 à 6, **caractérisé en ce que** les éléments d'alimentation de lubrifiant (17) sont réalisés en section transversale de manière sensiblement triangulaire, leur pointe (18) étant dirigée en éloignement de la surface de glissement (15).

8. Garniture d'étanchéité de mécanisme de roulement selon l'une des revendications 1 à 7, **caractérisé en ce que** les évidements (25), s'étendent à partir de la surface frontale tournée en éloignement de la surface de glissement (23), dans la direction de la surface de glissement (23).

9. Garniture d'étanchéité de mécanisme de roulement selon l'une des revendications 1 à 8, **caractérisé en ce que** les éléments d'alimentation de lubrifiant (11, 12, 17, 19, 25) sont disposés dans la zone de la surface périphérique s'étendant radialement à l'intérieur (19, 16, 24) de l'anneau de glissement (1, 14) et/ou du contre-anneau (2, 22).
